# EUROPÄISCHE PATENTSCHRIFT

(11) **EP 0 421 151 B1**
(45) Veröffentlichungstag und Bekanntmachung des Hinweises auf die Patenterteilung: **29.03.1995**
(21) Anmeldenummer: 90117363.3
(22) Anmeldetag: 10.09.1990
(51) Int. Cl.: D01H 13/00, D01H 15/013, G05D 3/00

(54) **Andockgerät mit Koppelsensorsystem**
Coupling-device having a coupling sensor system
Dispositif de couplage ayant un système de détection pour ce couplage

(30) Priorität: 03.10.1989 CH 3596/89
(43) Veröffentlichungstag der Anmeldung: 10.04.1991
(73) Patentinhaber: MASCHINENFABRIK RIETER AG, CH-8406 Winterthur (CH)
(72) Erfinder: Slavik, Walter, CH-8810 Horgen (CH); Citterio, Giorgio, CH-8810 Horgen (CH); Brunekcer, Guido, CH-8955 Oetwil (CH)

(56) Entgegenhaltungen:
- NICHTS ERMITTELT

## Beschreibung

Die vorliegende Erfindung betrifft ein System zur Koordinierung von Bewegungen nach dem Oberbetriff des Anspruchs 1.

Ein bekanntes Systeme zur Koordinierung von Bewegungen verschiedener unabhängig angetriebener Maschinenteile, beispielsweise nach der DE-B1 25 01 338, bei dem ein an einem Bedienungsgerät für eine Spinnmaschine angebrachter Hebel an der Ringbank angelegt wird, eignt sich weniger für den Einsatz an modernen Spinnmaschinen, da es für langsamere Bewegungsabläufe ausgelegt ist und nicht die erforderliche Genauigkeit der Koordination der Bewegungen erreicht. In einer gattungsgemäßen Vorrichtung nach der DE-B1-1510626 wird zur Koordination von Bewegungen einer Ringbank mit einem Bedienungsgerät ein Tastsensor verwendet, der aber nur eine relativ langsame Annäherung an die Ringbank erlaubt.

Es ist Aufgabe der vorliegenden Erfindung, ein System zu schaffen, das auch bei raschen Bewegungsvorgängen eine Koordinierung der Bewegungen der verschiedenen Teile mit hoher Genauigkeit erreicht.

Diese Aufgabe wird durch ein System mit den Merkmalen im Kennzeichen des Anspruchs 1 erfindungsgemäß dadurch gelöst,
daß ein Teil mit zwei berührungslos wirksamen Sensoren bestückt ist, die je zur Abtastung zur Position des anderen Teiles innerhalb des jeweiligen Messbereichs geschaltet sind, wobei insbesondere ein bewegbares Teil eines Bedienungsgerätes den Bewegungen eines zweiten bewegbaren Teiles, insbesondere der Ringbank einer Ringspinnmaschine, nachgeführt wird. Das System gemäss der vorliegenden Erfindung ist somit nicht auf die Anwendung im Zusammenhang mit einem Bedienungsgerät einer Textilmaschine beschränkt. Der Messbereich des ersten Sensors kann relativ gross gewählt werden, sodass dieser Sensor sich zum Aufsuchen des zweiten Teiles bzw. zur gegenseitigen Grobpositionierung der Teile eignet, und der zweite Sensor einen relativ kleinen Messbereich aufweist und sich daher zu einer gegenseitigen Feinpositionierung der beiden Teile innerhalb relativ enger Toleranzen eignt.

Die Erfindung sieht ferner eine Steuerung für den Antrieb eines Teiles vor, die auf ein Ausgangssignal des ersten oder des zweiten Sensors reagieren kann, sowie Mittel zum Umschalten von einem Sensor zum anderen beim Uebergang von der Grobpositionierung zur Feinpositionierung.

Der den größeren Maßbereich aufweisende erste Sensor kann in einer fixen Stellung gegenüber einem bewegbaren Teil gehalten werden, während der zweite Sensor auf diesem Teil zwischen einer Betriebsposition und einer zurückgezogenen Position bewegbar getragen ist. Der zweite Sensor kann dann erst aus seiner zurückgezogenen Position in seine Betriebsposition bewegt werden, wenn die beiden Teile über den ersten Sensor gegenseitig grob positioniert worden sind.

Der Messbereich des zweiten Senors kann dann so klein bemessen werden, dass er ohne die Bewegung des Sensors in die Betriebsposition nicht zur Abtastung der Position des zweiten Teiles ausreicht.

Gemäss einer bevorzugten Variante dieser Erfindung ist der erste Sensor ein optischer Sensor und der zweite Sensor ein induktiver Sensor.

Während des Suchvorgangs zur Grobpositionierung kann die Bewegungsgeschwindigkeit des ersten Teiles reduziert werden, um den Positionierungsvorgang zu erleichtern. Vorzugsweise wird dabei bis zur Erreichung einer vorbestimmten Positionsabweichung nur die Geschwindigkeit vom Antrieb des ersten Teiles in Abhängigkeit vom Ausgangssignal des ersten Senors gesteuert bzw. geregelt, und erst nach der Erreichung dieser vorbestimmten Positionsabweichung wird auf Positionsregelung umgeschaltet.

Die Erfindung wird nun anhand von Ausführungsbeispielen und den Figuren der Zeichnungen näher erläutert werden. Es zeigt:
- Fig. 1: eine schematische Darstellung eines Bedienungsroboters, wobei Fig. 1A ein Detail des Roboters in grösserem Massstab darstellt,
- Fig. 2: einen schematischen Querschnitt durch einen Teil einer Spinnstelle zusammen mit einem Arbeitskopf des Roboters,
- Fig.3-6: Diagramme zur Erklärung einer Weiterentwicklung dieser Erfindung für das in Fig. 1 und 3 abgebildete System,
- F.7A,7B: Zeitdiagramme zur Erklärung des Ablaufes,
- Fig. 8: Eine schematische Darstellung eines Steuerungssystemes, das zur Anwendung in Kombination mit der Weiterentwicklung gemäss Fig. 3 - 6 geeignet ist und
- Fig. 9: Ein Detail des Systems nach Fig. 8, wobei die Figuren 9A, 9B und 9C verschiedenen Arbeitszustände vom Gerät gemäss Fig. 9 darstellen.

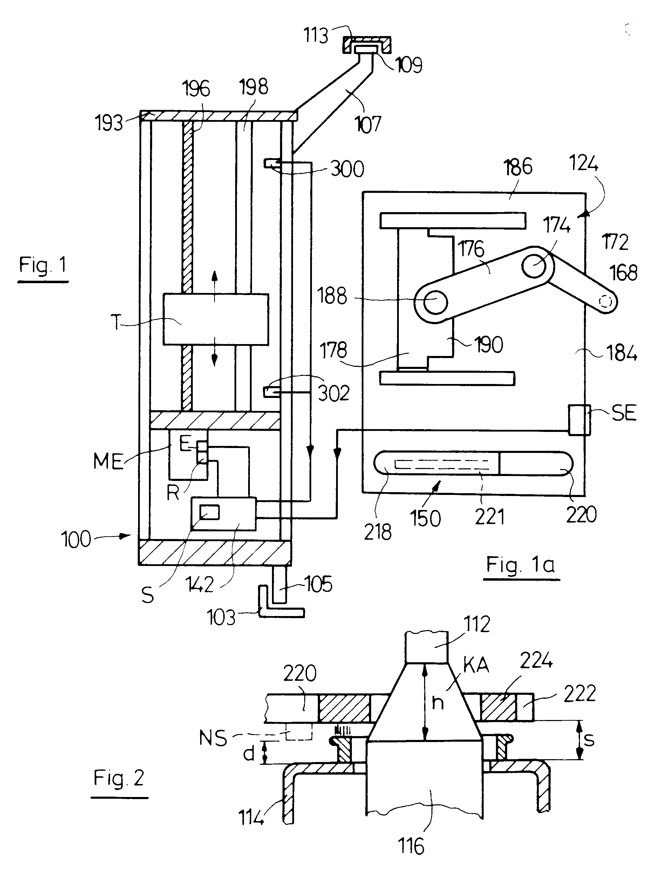

Figur 1 zusammen mit Figur 1A zeigen schematisch einen Bedienungsroboter für eine Ringspinnmaschine oder Ringzwirnmaschine. Das Fahrgestell ist mit dem Bezugszeichen 100 angedeutet und läuft auf von einer Führungsschiene 103 geführten Fahrrädern 105 der zu bedienenden Maschine entlang. Das Gestell 100 trägt zumindest einen Stützarm 107 mit einer Führungsrolle 109, die in einer zweiten Führungsschiene 113 läuft und das Gestell 100 in eine vorbestimmte Stellung oder Lage der nicht gezeigten Maschine gegenüber hält. Die beiden Führungsschienen sind am Maschinengestell zu befestigen.

Das Fahrgestell 100 trägt eine Führungsstange 198 und eine Gewindespindel 196, die sich beide senkrecht zwischen einer oberen und einer unteren Trägerplatte 193 erstrecken. Die Gewindespindel 196 verläuft auch durch eine Bohrung in einer der Trägerplatten, der unteren Trägerplatte 193, und ist mit einer Motoreinheit ME gekoppelt. Die von der Motoreinheit ME bewirkte Drehung der Gewindespindel 196 um die eigene Längsachse bewirkt eine vertikale Verschiebung von einem Träger T, der von der Gewindespindel 196 getragen und von der Stange 198 geführt wird. Auf den Träger T ist ein Schlitten 186 (Fig. 1A) montiert, sodass der Schlitten sich auf und ab mit dem Träger bewegt. Der Schlitten 186 trägt seinerseits gewisse Arbeitselemente, die zur Ausführung von Bedienungsarbeiten an den Spinnstellen der Ringspinnmaschine ausgelegt sind. Zur Klarheit der Darstellung ist der Schlitten 186 in grösserem Masstab neben dem Roboter in Fig. 1 gezeigt worden, wobei gewisse Steuerungsverbindungen zwischen dem Schlitten und dem Fahrgestell schematisch angezeigt sind.

Ein Bedienungsroboter des bislang im Zusammenhang mit Figur 1 und 1A beschriebenen Types ist aus dem Stand der Technik bekannt - siehe z.B. DAS 25 01 338 und US-PS 3 445 997. Die vertikale Bewegbarkeit von einem Teil des Bedienungsroboters kann verschiedenen Funktionen dienen. Der entsprechende Arbeitsablauf verlangt eine komplexe Kombination von Funktionen, welche entsprechend hohe Anforderungen an das Bewegungssystem für den Schlitten 186 stellen und daher als Veranschaulichung der Möglichkeiten eines Systems gemäss dieser Erfindung geeignet sind. Die Erfindung ist aber nicht auf die Anwendung in Kombination mit solchen Geräten eingeschränkt.

Der Schlitten 186 trägt ein Handhabungsgerät 124 und ein Anwickelgerät 150.

Das Gerät 124 umfasst ein Gehäuse 190, das drehbar um eine senkrechte Achse 178 montiert ist. Die Achse 178 verläuft senkrecht zwischen einer oberen und einer unteren Platte, die beide starr auf eine Trägerplatte 184 montiert sind. Das Gehäuse 190 trägt zwei Hebel 172, 176, die miteinander über eine Schwenkachse 174 und mit dem Gehäuse 190 über eine Schwenkachse 188 verbunden sind. An seinem freien Ende ist der Hebel 172 mit einer Halterung 168 für ein nicht gezeigtes Fadenführungselement, z.B. ein Mündungsteil von einem Fadenspeicher in der Form eines Saugrohres, versehen. Die Achsen 174, 188, 178 sind angetrieben und werden dabei von einer Steuerung 142 (Fig. 1) im Fahrgestell 100 gesteuert, um dabei einen Faden gegenüber dem Schlitten 186 zu manipulieren. Beim Fahren des Bedienungsroboters der Maschine entlang sind die Arme 172, 176 des Handhabungsgerätes 124 im Bedienungsroboter zurückgezogen, um Kollisionen mit Maschinenteilen zu vermeiden. Nachdem aber der Bedienungsroboter sich an einer zu bedienenden Spinnstelle positioniert hat, kann der Hebel 172 mit seiner Halterung 168 in die Spinnstelle hineingestreckt werden, um darin Bedienungsarbeiten auszuführen.

Das Anwickelgerät 150 umfasst einen Trägerzylinder 218, der auf der Schlittenplatte 184 montiert ist, und einen Arbeitskopf 220, der auf einer im Zylinder 218 verlaufenden Führungsstange 221 montiert ist. Der Arbeitskopf 220 ist beim Fahren des Roboters in einer zurückgezogenen Position (Fig. 1A) gehalten, kann aber durch Bewegung der Führungsstange 221 nach rechts, gemäss Fig. 1, in einer Spinnstelle zur Ausführung von Bedienungsarbeiten ausgestreckt werden.

Fig 2 zeigt eine Teilansicht einer Spinnstelle, nämlich einen Querschnitt durch die Ringbank 114 mit dem Spinnring 114' mit einem teilgebildeten Kops 116 auf einer Hülse 112. Der abgebildete Teil vom Kops 116 umfasst den kegelförmigen Ansatz KA mit der obersten Windung W entsprechend dem momentanen obersten Umkehrpunkt der Hubbewegung von der Ringbank 114. Die axiale Länge h des kegelförmigen Ansatzes entspricht dem momentanen Hub der Ringbankbewegung, wobei diese Hubbewegung Schritt für Schritt während des Pakkungsaufbaues nach oben verlagert wird, um den Kops Schicht für Schicht aufzubauen.

In einer vorbestimmten Arbeitsstellung vom Arbeitskopf 220 wird dieses Element aus dem Roboter der Spinnstelle angenähert, um ein Teil 222 des Arbeitskopfes dem Kops zuzustellen und dabei einen Laufpfad für einen Läufer 224 zu bilden. Der Schlitten 186 bewegt sich der Spindel 196 entlang auf und ab entsprechend der Hubbewegung der Ringbank 114. Währenddessen muss ein vorbestimmter Abstand S zwischen dem Arbeitskopf 220 und der Ringbank 114 eingehalten werden.

Zum Einstellen und Einhalten der erwünschten gegenseitigen Positionierung von Schlitten 186 und Ringbank 114 können zwei Sensoren auf dem Schlitten vorgesehen werden, nämlich ein optischer Sensor SE (Fig. 1A) auf dem Schlitten 186 selber und ein induktiver Näherungsschalter NS (Fig. 2) auf dem Arbeitskopf 220. Beide Sensoren können dann mit einer Steuerung 142 (Fig. 1) für den Motor ME verbunden werden.

Die nachfolgende Beschreibung befasst sich hauptsächlich mit den Beschaffenheiten der Sensoren SE und NS im Vergleich zueinander und mit ihrer Zusammenarbeit untereinander und mit der Steuerung 142.

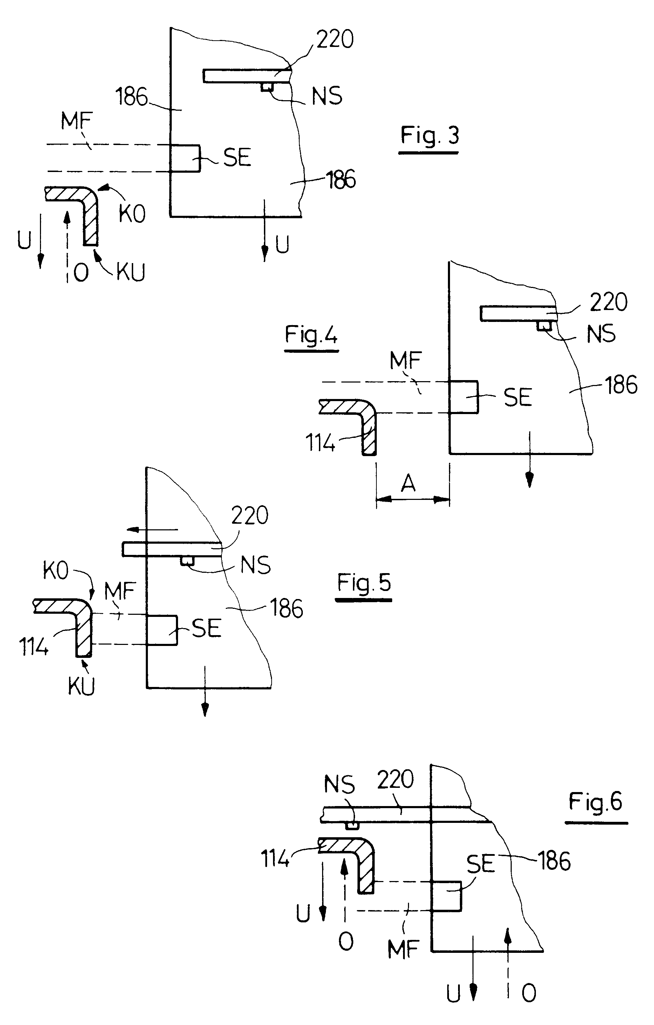

Die Fig. 3 bis 6 zeigen je einen Teil des Schlittens 186 mit dem Sensor SE, einen Teil des Arbeitskopfes 220 mit dem Sensor NS und einen dem Schlitten 186 zugewandten Teil der Ringbank 114.

Es sei zuerst angenommen, der Bedienungsroboter sei fern von der Ringbank 114 und müsse daher einen Suchvorgang durchlaufen. Bei einem solchen Vorgang wird der Schlitten 186 nach oben der Spindel 196 und Stange 198 entlang bewegt, bis der Schlitten eine Position erreicht hat, die oberhalb vom oberen Umkehrpunkt der Ringbank liegt. Die Bewegungsrichtung des Schlittens 186 wird dann gekehrt, so dass er sich nach unten bewegt in der Pfeilrichtung U (Fig. 3). Diese Bewegung nach unten wird mit einer relativ hohen Suchgeschwindigkeit ausgeführt, welche von der Steuerung 142 aus vorgegeben wird. Dabei ist der Arbeitskopf 220 in einer zurückgezogenen Position auf dem Schlitten 186, während der Sensor SE ein Messfeld MF hat, das sich quer zur Fahrtrichtung des Schlittens 186 in die Spinnstelle hinein erstreckt.

In der in Fig. 3 dargestellten Bewegungsphase befindet sich der Schlitten 186 immer noch so weit oberhalb der Ringbank 114, dass letzterer noch nicht in das Messfeld des Sensors SE eingedrungen ist. Dabei kann sich zu dieser Phase die Ringbank nach unten (Pfeilrichtung U) oder nach oben (Pfeilrichtung O, gestrichelt) bewegen in Abhängigkeit vom Kopsbildungsprogramm der Ringspinnmaschine. Die Suchgeschwindigkeit des Schlittens 186 ist deswegen beträchtlich höher als die Geschwindigkeit der Ringbank 114 bei ihrer Hubbewegung nach unten.

Fig. 4 stellt das Eindringen der oberen Kante der Ringbank 114 in das Messfeld MF des Sensors SE dar. Dies kann entweder deswegen erfolgen, weil der Schlitten 186 und die Ringbank 114 einander kreuzen, oder weil der Schlitten 186 die Ringbank bei ihrer Hubbewegung nach unten eingeholt hat. Der Sensor SE erkennt das Eindringen der Ringbank in sein Messfeld, und ändert sein Ausgangssignal auf entsprechende Weise. Die Steuerung 142 (Fig. 1) reagiert darauf, indem sie die Bewegungsgeschwindigkeit des Schlittens 186 von der Suchgeschwindigkeit auf eine Positionierungsgeschwindigkeit reduziert. Der Schlitten bewegt sich immer noch nach unten, und zwar mit einer Geschwindigkeit, die leicht höher ist als die Bewegungsgeschwindigkeit der Ringbank 114, falls letztere sich auch nach unten bewegt. Ungefähr zum gleichen Zeitpunkt löst die Steuerung 142 eine Bewegung des Arbeitskopfes aus seiner zurückgezogenen Position in seine Betriebsposition aus.

Dieser Zustand des Systems wird eingehalten, bis der Schlitten 186 und die Ringbank 114 die in Figur 5 abgebildete gegenseitige Positionierung erreicht haben, wobei die dem Schlitten 186 zugewandte Stirnseite der Ringbank 114 dem Sensor SE direkt gegenübersteht. Dieser Zustand wird relativ schnell erreicht, falls die Ringbank 114 sich nach oben bewegt, und relativ langsam, wenn der Schlitten 186 die Ringbank 114 beim Absenken überholen muss. Das vom Sensor SE abgegebene Signal hat einen Höhepunkt erreicht, wenn gemäss Fig. 5 der Sensor SE mit seinem Messfeld MF etwa auf der halben Höhe des vertikalen Schenkels der Ringbank 114 liegt. Die Bewegung des Arbeitskopfes 220 in Richtung seiner voll ausgefahrenen (Betriebs-) Position (Fig. 6) wird fortgesetzt. In der in Fig. 5 dargestellten Zwischenphase liegt der Sensor NS aber noch nicht oberhalb der Ringbank 114 und dieser Sensor spielt für die Steuerung immer noch keine Rolle.

In Fig. 6, wo der Arbeitskopf 220 in seiner Betriebsposition dargestellt ist, liegt Sensor NS direkt oberhalb der Ringbank 114. Die Steuerung schaltet aber erst dann vom Ausgangssignal des Sensors SE zum Ausgangssignal des Sensors NS, wenn der Schlitten 186 eine vorbestimmte Position gegenüber der Ringbank 114 erreicht hat, welcher eine erkennbare Position der unteren Kante Ku der Ringbank 114 im Messfeld MF des Sensors SE, entspricht.

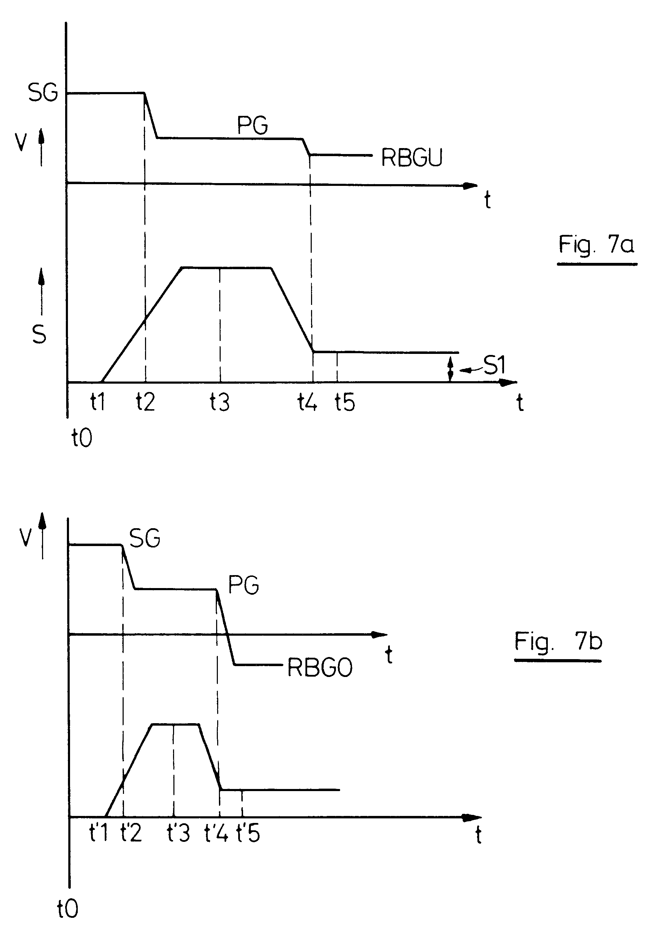

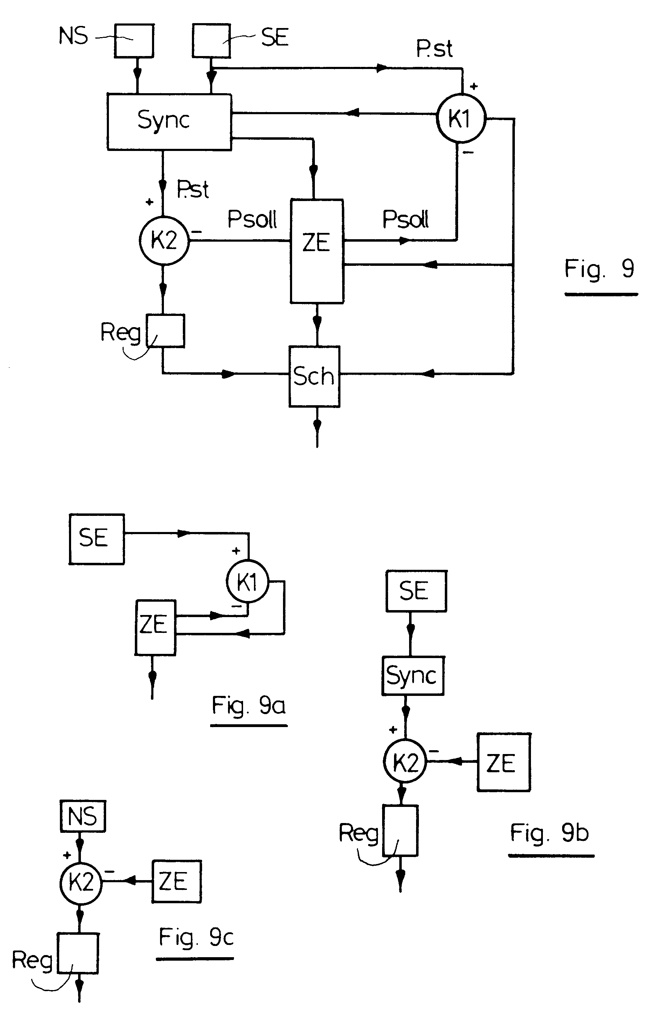

Nachher wird die Steuerungsfunktion nicht mehr in Abhängigkeit vom Ausgangssignal des Sensors SE sondern in Abhängigkeit des Sensors NS durchgeführt. Vor dieser Umschaltung von einem Sensor zum anderen wird die Konfiguration der Steuerung selber umgeschaltet, und zwar derart, dass der Motor ME (Fig. 1) nicht nur einer Geschwindigkeitsregelung, sondern auch nach dieser Umschaltung einer Positionsregelung unterworfen wird. Diese Umschaltung wird nachfolgend in Fig. 9 näher erläutert werden. Vorerst wird aber der Vorgang anhand der Diagramme in den Fig. 7a und 7b nochmals erklärt werden und dann Beziehungen zu den Beschaffenheiten der beiden Sensoren SE und NS aufgeführt werden.

In Fig. 7a wird die Zeit auf der waagrechten Achse dargestellt, während auf der senkrechten Achse im oberen Teil des Diagramms die Geschwindigkeit V des Schlitten 186 und im unteren Teil des Diagramms die Signalspannung S am Ausgang des Sensors SE dargestellt wird. Es sei angenommen, die Ringbank 114 bewegt sich nach unten. Im Zeitpunkt t0 ist das System in einem Zustand entsprechend Fig. 3, wobei der Schlitten sich nach unten mit der Suchgeschwindigkeit SG bewegt und die Spannung am Ausgang des Sensors SE als 0 angenommen wird. Im Zeitpunkt t1 dringt die obere Kante Ko der Ringbank 114 in das Messfeld des Sensors SE ein und die Spannung am Ausgang des Sensors nimmt daher zu. Nach einer leichten Verzögerung führt dies im Zeitpunkt t2 zu einer Reduktion der Schlittengeschwindigkeit auf die Positionierungsgeschwindigkeit PG. Etwa zur gleichen Zeit beginnt die Bewegung des Arbeitskopfes 220 in seine Betriebsposition, welche er vor dem Zeitpunkt t4 erreichen muss.

Der Zeitpunkt t3 entspricht dem Zustand in Fig. 5 mit der Ausgangsspannung des Sensors SE auf einem Höhepunkt. Zum Zeitpunkt t4 wird das Steuerungssystem umfunktioniert, um den Motor ME nachher in Abhängigkeit von der relativen Positionierung des Schlittens 186 gegenüber der Ringbank 114 zu regulieren. Die Geschwindigkeit des Schlittens 186 wird deswegen nach diesem Zeitpunkt t4 nochmals geändert, um sich der Senkgeschwindigkeit RBGU der Ringbank 114 anzugleichen. Zu diesem Zeitpunkt liegt der Sensor NS voll oberhalb der Ringbank 114, aber die erste Phase der Positionsregelung wird weiterhin anhand des Ausgangssignals vom Sensor SE eingeleitet, bis im Zeitpunkt t5 die Positionsregelabweichung stabil unterhalb einer vorbestimmten Grenze liegt. Es wird dann auf die Regelung nach dem Ausgangssignal des Sensors NS umgeschaltet, was die Einhaltung des gegenseitigen Abstand gewährleistet. Die Spannung S1 am Ausgang des Sensors SE bleibt deswegen nach dem Zeitpunkt t5 bis zum Abbruch der Bedienungsoperation ungefähr konstant.

Fig. 7b zeigt den gleichen Ablauf, aber für den Fall, dass die Ringbank 114 sich nach oben, in Pfeilrichtung O (Fig. 3 -6) bewegt. Der Vorgang muss daher schneller ablaufen, was die Zeitabstände zwischen den verschiedenen Schaltpunkten verkürzt. Dies ist in Fig. 7b durch einen Strich auf den Bezugszeichen t2,t3,t4 und t5 angedeutet. Der andere bedeutungsvolle Unterschied zwischen Fig. 7a und Fig. 7b sieht man im oberen Diagrammteil, wo der Schlitten 186 zwischen Zeitpunkt t4 und t5 umkehren muss, um der Ringbank 114 mit der Hubgeschwindigkeit RBGO zu folgen.

Der wesentliche Unterschied zwischen den Sensoren SE und NS liegt in den Grössen ihrer Messfelder. Während der Sensor SE ein relativ grosses Messfeld aufweist, d.h. ein Messfeld mit einer grossen Ausbreitung und einer langen Reichweite, um die Position der Ringbank 114 vom Schlitten 186 aus abtasten zu können, besitzt der Sensor NS ein relativ kleines Messfeld mit geringerer Reichweite und Ausbreitung. Der Sensor NS kann daher erst zur Regulierung angewendet werden, wenn sein Trägerkopf 220 ausgefahren ist und die Ringbank 114 und Schlitten 186 innerhalb eines Feinpositionierungsbereiches anhand des Ausgangssignales vom Sensor SE gebracht worden sind. Dafür aber reagiert das Ausgangssignal vom Sensor NS auf relativ kleine Abweichungen vom erwünschten Abstand S (Fig. 2), was dessen Einhaltung erleichtert.

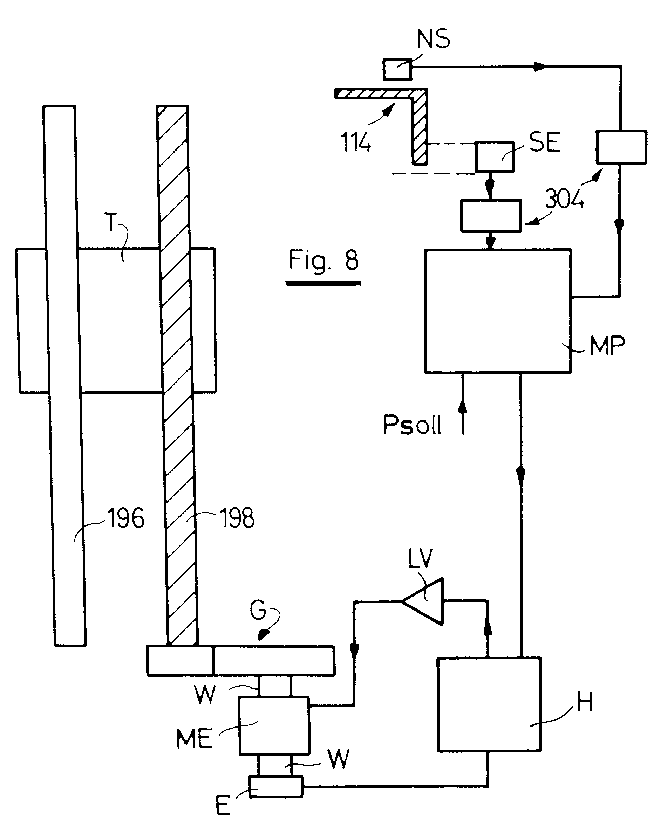

Fig. 8 zeigt weitere Einzelheiten des Regelsystems zur Erzielung der schon beschriebenen Resultate. Es wird hier angenommen, dass die Welle W vom Antriebsmotor ME über ein Getriebe G mit der Gewindespindel 198 verbunden wird und dass diese Welle auch mit einem Encoder E versehen ist. Das Ausgangssignal des Encoders E wird an einen Regelprozessor H geliefert, welcher Signale zur Steuerung eines Leistungsverstärkers LV abgibt. Der Verstärker LV steuert die an den Motor ME abgegebene Leistung. Der Regelprozessor H wird von einem Hauptprozessor MP gesteuert.

Ein Regelkreis E, H, LV, ME ist in der Lage, die Geschwindigkeit des Motors ME zu regeln, anhand von Befehlen, die im Hauptprozessor MP erzeugt werden. In diesem Fall werden alle Positionsinformationen im Hauptprozessor selber verarbeitet.

Fig. 8 zeigt nochmals schematisch die Ringbank 114 mit dem Sensor SE und sein Messfeld MF ungefähr zum Zeitpunkt, wenn eine Umschaltung vom Sensor SE zum Sensor NS durchgeführt werden sollte. Der Sensor NS liegt demgemäss direkt oberhalb der Ringbank 114. Beide Sensoren SE und NS sind mit dem Hauptprozessor MP über jeweilige Analog/Digitalumwandler 304 verbunden. Am Eingang Psoll zum Hauptprozessor MP kann der Benützer eine gewünschte Position des Sensors SE gegenüber der Ringbank 114 eingeben, wo die Umschaltung vom Sensor SE zum Sensor NS erfolgen sollte.

Fig. 9 zeigt jetzt den Ablauf gewisser Funktionen innerhalb des Hauptprozessors MP. Es muss aber erkannt werden, dass diese Funktionen eigentlich über die Programmierung des Prozessors und nicht über Hardeware-Verbindungen durchgeführt werden. Die bildliche Darstellung erleichtert aber die Erklärung dieser Funktionen. Die Nebendiagramme Fig. 9a, b und c stellen vereinfacht verschiedene Phasen des Positionierungsvorganges dar. Gemäss der Darstellung in Fig. 9 besteht der Hauptprozessor MP aus einer Zentraleinheit ZE, die Steuer- und Ueberwachungsfunktionen übernimmt, einer Synchronisierungseinheit Sync, welche die Umschaltung vom Sensor SE zum Sensor NS durchführt, zwei Komparatoren K1 und K2, ein Regelgerät Reg und ein Schaltgerät Sch.

Den ersten Zustand dieser Anordnung sieht man in Figur 9a, welcher die Zeitspanne t0 bis t4 in Fig. 7a und 7b entspricht. Zu dieser Zeit ist nur Sensor SE wirksam und gibt sein Ausgangssignal Pist an den Komparator K1, welcher auch einen Sollwert Psoll von der Zentraleinheit ZE erhält. Bis zum Zeitpunkt t1 bleibt das Ausgangssignal Pist gemäss Fig. 7A und Fig. 7B auf 0, was bedeutet, das die relative Positionierung der Teile ausserhalb der gröbsten Grenzen des Systemes liegt. Die Geschwindigkeitsbefehle, vom Hauptprozessor an den Regelprozessor H (Fig. 8), sind von der Zentraleinheit direkt bestimmt worden. Der Zustand des Schaltgerätes Sch (Fig. 9) wird entsprechend vom Komparator K1 eingestellt. Das Eindringen der oberen Kante von der Ringbank 114 in das Messfeld MF wird vom Komparator K1 erkannt und an die Zentraleinheit ZE gemeldet (Fig. 9A) sodass die von der Zentraleinheit bestimmte Geschwindigkeit reduziert wird.

Zum Zeitpunkt t4 wird der Zustand auf denjenigen der Fig. 9b geändert, und zwar dadurch, dass der Komparator K1 durch seinen Vergleich der Pist und Psoll Signale die erwünschte gegenseitige Positionierung der Teile erkennt. Der Komparator K1 ändert dementsprechend den Zustand des Schaltgerätes Sch, so dass die an den Regelprozessor H abgegebenen Signale nicht mehr direkt von der Zentraleinheit ZE, sondern nun vom Regelgerät Reg bestimmt werden. Das Eingangssignal an das Regelgerät Reg stellt eine vom Komparator K2 festgestellte Abweichung zwischen dem Ausgangssignal Pist vom Sensor SE und dem von der Zentraleinheit ZE bestimmten Sollwert Psoll dar.

Beim Umschalten zum Zustand der Figur 9b gibt der Komparator K1 auch ein Signal an das Synchronisationsgerät Sync ab, das ab dann überprüft, ob die Positionsabweichung einen vorgegebenen Wert unterschreitet. Sobald dieser Wert unterschritten wird (Zeitpunkt t5, Fig.7A), schaltet das Gerät Sync auf den Sensor NS um. Der Zustand nach Fig. 9c bleibt daher erhalten, bis die Bedienungsoperation, welche diese Positionierungsgenauigkeit verlangt, beendet wird.

Falls innerhalb einer gewissen Zeitperiode nach dem Umschalten auf den Zustand nach Fig. 9b wegen zu grosser Regelabweichung nicht auf den Sensor NS umgeschaltet werden kann, muss der Vorgang abgebrochen werden und von vorn wiederbegonnen werden. Das fehlende Umschalten von einem Sensor zum änderen innerhalb der vorgegebenen Zeitperiode wird vom Synchronisierungsgerät Sync bemerkt und an die Zentraleinheit ZE gemeldet, wobei letztere dann die Abbruchfunktion auslöst.

Der Sensor SE ist vorzugsweise ein Lichttaster. Der Sensor NS ist vorzugsweise ein induktiver Sensor, der an seinem Ausgang ein analoges Signal proportional zum Abstand zwischen Sensorkopf und dem abzutastenden Gegenstand zur Verfügung stellt.

Die beschriebene Kombination von zwei Messorganen ergibt einen relativ grossen Messbereich vom ersten Sensor und eine hohe Messgenauigkeit im Hauptarbeitsbereich des Bedienungsroboters, bestimmt durch den zweiten Sensor. Der grosse Messbereich des ersten Sensors SE erlaubt die Koordinierung der separat antreibbaren Teile mit relativ hoher Geschwindigkeit. Ferner sind bei erkannter Ringbank kleinere Drehmomente des Positionierantriebs nötig, um die Geschwindigkeit des Schlittens 186 an die Geschwindigkeit der Ringbank 114 anzupassen. Weiter ist es möglich, da zwei Messorgane vorhanden sind, eine gegenseitige Ueberwachung einzubauen, dadurch wird die Möglichkeit einer Fehlfunktion mit Schadensfolge reduziert. Ferner ist es möglich, die Empfindlichkeit gegen Schwankungen des Abstandes A (Fig. 4) zwischen der Messeinrichtung und der Ringbank innerhalb tragbarer Grenzen zu halten.

Die Erfindung ist nicht auf Einzelheiten des beschriebenen Systems eingeschränkt. Als Beispiel ist gesagt worden, dass der Schlitten auf dem Suchgang von oben nach unten bewegt wird und zwar aus einer Ausgangsposition die oberhalb der Ringbank liegt. Wenn per Zufall beim Beginn eines Positionierungsablaufes die Ringbank schon direkt im Sichtfeld des Sensors SE liegt, kann die erste Phase des Suchvorganges (Fig. 3) fallengelassen werden, sodass die erwünschte gegenseitige Stellung der Teile beispielsweise bei reduzierter Geschwindigkeit sofort gesucht wird. Weiter könnte im Prinzip das System umgekehrt laufen, sodass die Ringbank von unten gesucht wird.

## Patentansprüche

1. System zur Koordinierung der Bewegungen von zwei bewegbaren Teilen (114, 186), die je einem eigenen Antrieb zur Erzeugung der jeweiligen Bewegungen zugeordnet sind, wobei ein Teil (186) einen sensorgesteuerten Antrieb aufweist, der mit dem Sensor verbunden ist, dadurch gekennzeichnet, dass ein Teil (186) mit zwei berührungslos wirksamen Sensoren (SE,NS) bestückt ist, die je zur Abtastung der Position des anderen Teiles (114) innerhalb des jeweiligen Messbereichs geschaltet sind, wobei insbesondere ein bewegbares Teil (186) eines Bedienungsgerätes den Bewegungen eines zweiten bewegbaren Teiles, insbesondere der Ringbank (114) einer Ringspinnmaschine, nachgeführt wird.

2. System nach Anspruch 1, dadurch gekennzeichnet, dass der Messbereich (MF) des ersten Sensors (SE) relativ gross gewählt wird, so dass dieser Sensor sich zum Aufsuchen des zweiten Teiles (114) und zur gegenseitigen Grobpositionierung der Teile (114,186) eignet, und der zweite Sensor (NS) einen relativ kleinen Messbereich (d) aufweist, und sich daher zu einer gegenseitigen Feinpositionierung der beiden Teile (186,114) innerhalb relativ enger Toleranzen eignet.

3. System nach Anspruch 2, dadurch gekennzeichnet, dass der den grösseren Messbereich (MF) aufweisende erste Sensor (SE) in einer fixen Stellung gegenüber einem bewegbaren Teil (186) gehalten wird, während der zweite Sensor (NS) auf diesem Teil (186) zwischen einer Betriebsposition und einer zurückgezogenen Position bewegbar getragen ist.

4. System nach einem der Ansprüche 2 oder 3, dadurch gekennzeichnet, dass eine Steuerung (MP) für den Antrieb eines Teiles (186) vorgesehen ist, die auf ein Ausgangssignal des ersten (SE) oder des zweiten Sensors (NS) reagieren kann, sowie Mittel (Sync) zum Umschalten von einem Sensor (SE) zum anderen (NS) beim Übergang von der Grobpositionierung zur Feinpositionierung.

5. System nach Anspruch 3 oder 4, dadurch gekennzeichnet, dass der zweite Sensor (NS) erst dann aus seiner zurückgezogenen Position in seine Betriebsposition bewegt wird, wenn die beiden Teile (114,186) über den ersten Sensor (SE) gegenseitig grob positioniert worden sind.

6. System nach Anspruch 4 oder 5, dadurch gekennzeichnet, dass während des Aufsuchvorgangs zur Grobpositionierung die Bewegungsgeschwindigkeit des ersten Teiles (114) reduziert wird.

7. System nach Anspruch 4,5 oder 6, dadurch gekennzeichnet, dass bis zur Erreichung einer vorbestimmten Positionsabweichung nur die Geschwindigkeit vom Antrieb des ersten Teiles (114) in Abhängigkeit vom Ausgangssignal des ersten Sensors (SE) gesteuert bzw. geregelt und erst danach auf Positionsregelung umgeschaltet wird.

8. System nach einem der vorangehenden Ansprüche, dadurch gekennzeichnet, dass der erste Sensor (SE) ein optischer Sensor und der zweite Sensor (NS) ein induktiver Sensor ist.

## Claims

1. A system for coordinating the movements of two movable parts (114, 186) which are each allocated to a separate drive for producing the respective movements, with one part (186) having a sensor-controlled drive which is connected to the sensor, characterized in that one part (186) is equipped with two sensors (SE, NS) which are effective on a contact-free basis and are each connected for scanning the position of the other part (114) within the respective measuring range, with a movable part (186) of an operating device in particular being made to follow the movements of a second movable part, in particular the ring rail (114) of a ring spinning machine.

2. A system as claimed in claim 1, characterized in that the measuring range (MF) of the first sensor (SE) is selected relatively large so that said sensor is suitable for seeking the second part (114) and for mutual rough positioning of the parts (114, 186) and the second sensor (NS) is provided with a relatively small measuring range (d) and is therefore suitable for mutual fine positioning of the two parts (186, 114) within relatively narrow tolerances.

3. A system as claimed in claim 2, characterized in that the first sensor having the larger measuring range (MF) is kept at a fixed position with respect to the movable part (186), whereas the second sensor (NS) on said part (186) is movably held between an operating position and a retracted position.

4. A system as claimed in one of the claims 2 or 3, characterized in that a control (MP) is provided for the drive of one part (186) which can react to the output signal of the first (SE) or the second sensor (NS) as well as means (Sync) for switching over from one sensor (SE) to the other (NS) during the transition from rough positioning to fine positioning.

5. A system as claimed in claim 3 or 4, characterized in that the second sensor (NS) is moved from its retracted position to its operating position only when the two parts (114, 186) have been positioned mutually roughly via the first sensor (SE).

6. A system as claimed in claim 4 or 5, characterized in that the moving speed of the first part (114) is reduced during the search process for rough positioning.

7. A system as claimed in claim 4, 5 or 6, characterized in that until reaching a predetermined position deviation only the speed is controlled by the drive of the first part (114) depending on the output signal of the first sensor (SE) and that only thereafter a changeover to positioning control is made.

8. A system as claimed in one of the previous claims, characterized in that the first sensor (SE) is an optical sensor and the second sensor (NS) is an inductive sensor.

## Revendications

1. Système servant à la coordination des mouvements de deux parties (114, 186) pouvant être mises en mouvement, et qui sont attribuées chacune à un propre entraînement afin de réaliser les mouvements correspondants, et où une partie (186) possède un entraînement dirigé par détecteur, et relié avec le détecteur,
caractérisé par le fait
qu'une partie (186) est équipée de deux détecteurs (SE, NS) agissant sans contact, qui sont enclenchés chacun pour détecter la position de l'autre partie (114), a l'intérieur de la zone de mesure correspondante, et où particulièrement une partie (186) d'un appareil d'asservissement, pouvant être mise en mouvement, suit les mouvements d'une deuxième partie pouvant être mise en mouvement, particulièrement le banc porte-anneaux (114) d'une machine à filer à anneaux.

2. Système selon revendication 1,
caractérisé par le fait que
la zone de mesure (MF) du premier détecteur (SE) est choisie relativement grande, de sorte que ce détecteur est approprié pour rechercher la deuxième partie (114) et pour le positionnement réciproque grossier des parties (114, 186), et le deuxième détecteur (NS) possède une zone de mesure (d) relativement petite, et est donc approprié pour un positionnement réciproque précis des deux parties (186, 114), à l'intérieur de tolérances relativement serrées.

3. Système selon revendication 2,
caractérisé par le fait que
le premier détecteur (SE), possédant la zone de mesure plus grande (MF), est maintenu dans une position fixe par rapport à une partie pouvant être mise en mouvement (186), alors que le deuxième détecteur (NS) est porté par cette partie (186), pouvant être mis en mouvement entre une position de fonctionnement et une position en retrait.

4. Système selon l'une des revendications 2 ou 3,
caractérisé par le fait
qu'un asservissement (MP) est prévu pour l'entraînement d'une partie (186), qui peut réagir à un signal de sortie venant du premier détecteur (SE) ou du deuxième détecteur (NS), ainsi que des moyens (Sync) servant à commuter d'un détecteur (SE) sur l'autre (NS), lors du passage du positionnement grossier au positionnement précis.

5. Système selon revendication 3 ou 4,
caractérisé par le fait que
le deuxième détecteur (NS) n'est retiré hors de sa position de retrait et mis dans sa position de fonctionnement que lorsque les deux parties (114, 186) sont positionnées grossièrement réciproquement via le premier détecteur (SE).

6. Système selon revendication 4 ou 5,
caractérisé par le fait que
la vitesse de déplacement de la première partie (114) est réduite pendant le processus de recherche pour le positionnement grossier.

7. Système selon revendication 4, 5 ou 6,
caractérisé par le fait que
seule la vitesse d'entraînement de la première partie (114) est asservie respectivement réglée en fonction du signal de sortie du premier détecteur (SE), jusqu'a l'obtention d'une déviation de position prédéterminée, et est commutée seulement après sur le réglage de position.

8. Système selon l'une des revendications précédentes,
caractérisé par le fait que
le premier détecteur (SE) est un détecteur optique, et le deuxième détecteur (NS) est un détecteur inductif.
